# EUROPEAN PATENT SPECIFICATION

(11) **EP 1 331 799 B1**
(45) Date of publication and mention of the grant of the patent: **31.05.2006**
(21) Application number: 02002165.5
(22) Date of filing: 29.01.2002
(51) Int. Cl.: H04M 3/42

(54) **Automatic transmission of an information reply signal**
Automatische Übertragung eines Informationsantwortsignals
Transmission automatique d'un signal d'information de réponse

(43) Date of publication of application: 30.07.2003
(73) Proprietor: Agere Systems Guardian Corporation, Orlando, Florida 32819 (US)
(72) Inventor: Pugliese, Pierluigi, 85591 Vaterstetten (DE)
(74) Representative: Kampfenkel, Klaus

(56) References cited:
- EP-A- 1 128 645
- WO-A-01/72018
- WO-A-99/56450
- US-A- 6 058 180

## Description

The invention relates to a method for transmitting an information reply signal between the user terminal of a called party and the user terminal of a calling party of at least one telecommunication system and to a user terminal having such functionality.

In WO 01/72018 A2 a method and a system for processing electronic messages is described, which permits retrieval of messages and replying to messages using a variety of communication devices. The messages and replies may take on various formats, such as e-mail format or SMS format (Short Messaging Service). For the reply also the use of a voice reply message is described. However, with the method and the system described in WO 01/72018 A2 it is not possible to generate a reply signal in response to an incoming call.

Usually, if a party of a telecommunication system, in particular of a mobile radio system, is calling another party of the same or even of another telecommunication system and the called party for example is not available, this called party usually is missing that call. In this situation the called party might want to inform the calling party that he is reachable also on some other number or might want to transmit the calling party some other information that the calling party might use.

A known possibility to inform the calling party in such a situation accordingly, is to redirect a voice mail, such as for example by use of a telephone answerer or by use of a mail box. However, for the redirection of a voice mail normally the normal rate for a call is charged dependent on the respective telecommunication systems to the calling party or to the called party.

Moreover, usually such a telephone answerer or mail box is apt to redirect merely one or two voice mails independent on who is the calling party and independent on any other circumstances, such as for example the day time.

Additionally, the telephone answerer usually is a separate device which has to be bought resulting in additional costs, whereas a mail box is a service supported by the operator of the respective telecommunication system but for which the customer has to pay a rental.

An object of the invention is therefore to provide with regard to the above mentioned prior art a new and improved approach for redirecting a reply to the calling party if the called party is missing the call or is not available.

The inventive solution is achieved by a method, a user terminal, a telecommunication system and an implementation program product incorporating the features of claim 1, 8, 16 and 17, respectively.

Preferred and/or advantageous refinements or embodiments are the subject matter of the respective dependent claims.

Accordingly, the invention proposes to automatically retransmit an information signal from the user terminal of the called party to the user terminal of the calling party in response to an incoming call of said called party, with the incoming call originated by said calling party. Thus, in particular by use of a user terminal having means for directly transmitting or re-transmitting an information signal to a user terminal in response to an incoming call originated by said latter user terminal, there is not a need for any further additional and/or separate answering device or answering service and hence, the inventive approach significantly reduces the cost of purchase or the monthly running costs.

According to preferred embodiments it is proposed to generate such an information signal for optically and/or acoustically replaying. However, according to a very preferred refinement the inventive user terminal is provided with means for generating the information signal by use of a so called short message service which can be transmitted in comparison to an ordinary voice mail more cheaper.

Practically, the user terminal is provided with means for individually generating and storing at least one of such a re-transmittable information signal significantly improving the flexibility of the specific reply-messages.

Furthermore, the invention proposes to provide the inventive user terminal with means for assigning the at least one generated and stored information signal to at least one definable phone number of potential calling parties enabling that the messages might be different for each caller whereby also a grouping mechanism might be used, such as for example assigning one message to a plurality of potential calling parties.

Moreover, it is suggested to further provide means for assigning the at least one information signal to at least one specific day time such that the reply message might be different for each time of the day and thus can be optimised according to the individual behaviour of the called party.

According to a further improvement, the inventive user terminal comprises means for optionally activating the means for transmitting the information reply signal, whereby said means for activating preferably comprises a threshold with regard to the amount of call signals or ringing tones necessary for activating the means for transmitting.

Preferably, the inventive user terminal is incorporating a microprocessor or digital signal processor for supporting the inventive method and/or can be adapted accordingly by implementing a corresponding software further improving the flexibility of the automatic re-transmitting of individual information reply signals.

The invention also is covering a telecommunication system comprising such inventive user terminal and the respective implementation program product adapted to perform the inventive method.

Subsequently, the invention is exemplary described in more detail, in particular on the basis of a preferred refinement and with reference to the accompanied drawing, in which:
- Fig. 1: is schematically depicting the principle of transmitting or re-transmitting an information reply signal directly between two user terminals according to the invention, and
- Fig. 2: is schematically depicting essential components according to a very preferred embodiment of the inventive user terminal.

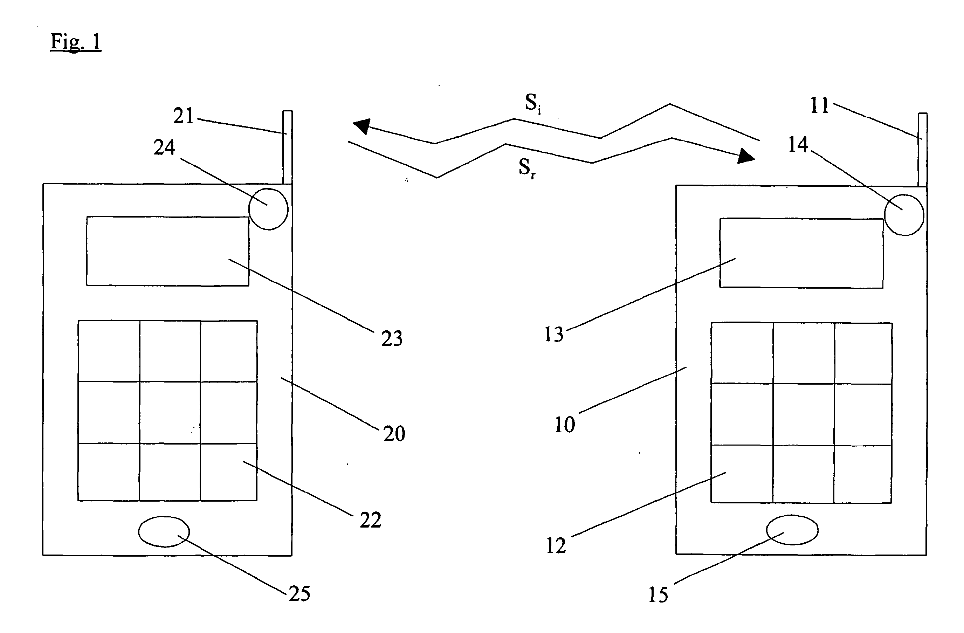

Referring next to Fig. 1, two user terminals 10 and 20 are schematically depicted, wherein the user terminal 10 is classified as a mobile station of a calling party of a mobile radio telecommunication system and the user terminal 20 is classified as a mobile station of a called party also of a mobile radio telecommunication system that can be identical to the previous system or can be another system.

Each of the user terminals are provided with an antenna 11, 21 adapted to transmit and receive information signals Sᵢ, Sᵣ, with a key board 12, 22 for controlling the specific operating functions and a display 13, 23 for optically representing selected operating functions, incoming or originating calls, stored parties assigned to their respective telephone number or for optically representing further services. Additionally each of the user terminals 10 and 20 is comprising a loudspeaker 14, 24 and a microphone 15, 25.

The information signal Sᵢ is representing an incoming call with regard to the user terminal 20 that is originated by the user terminal 10. On condition that the called party is not available or is simply missing the incoming call Sᵢ or does not want to accept the incoming call Sᵢ, for example due to the specific calling party optically depicted on the display 23, the user terminal 20 is automatically directed to send the originating user terminal 10 an information reply-signal Sᵣ preferably by use of an stored text message using a so-called short message service (SMS) supported by a plurality of telecommunication systems. Typical examples for such a text message may be "please try to call me at ...", "I will be available in a few minutes", "sorry, try tomorrow".

As known by persons skilled in the art such an SMS may be transmitted simultaneously but parallel to the incoming call Sᵢ or after the call Sᵢ has been terminated due to the non-acceptation thereof by the called party.

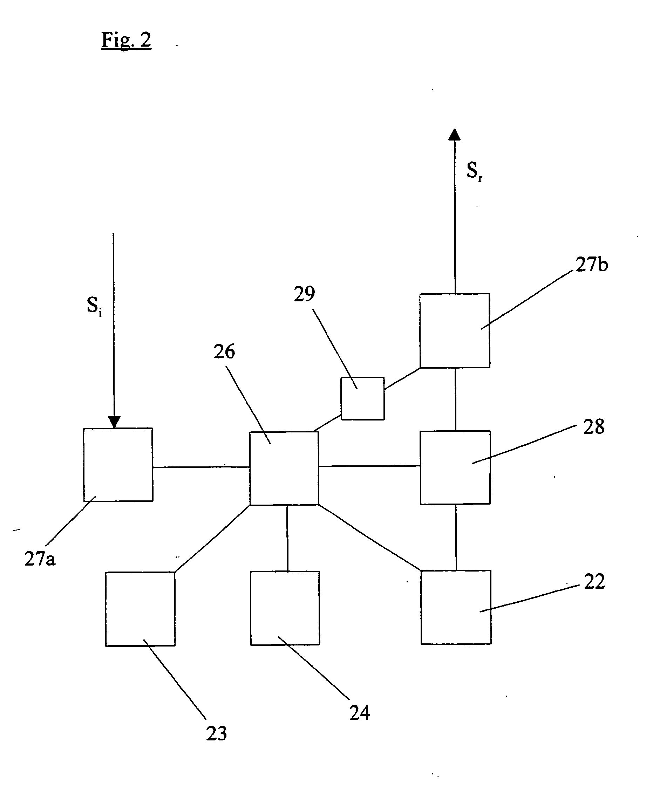

Essential components of the user terminal 20 for an exemplar methodology for such an automatic direction is schematically depicted in Fig. 2.

Accordingly, an incoming call Sᵢ passing the antenna is fed to a receiving unit 27a for the respective telecommunication system specific call signal processing. The receiving unit 27a is connected to a central micro processor 26 which is connected to the speaker unit 24 and to the display 23 to provide the call or ringing signal for the incoming call Sᵢ or to display for example the call number of the calling party.

The central micro processor 26 further is connected to the key board 22, a storage unit 28 and via a timer unit 29 to a transmitting unit 27b.

For controlling the generating of an automatic transmittable reply signal Sᵣ the micro processor 26 may comprise a corresponding hardware and/or software implementation, wherein the latter practically improves the flexibility. The storage unit 28 is further connected with the key board 22 so that individually generated or created messages and/or customised by the customer at will by use of the key board 22 can be stored in the storage unit 28.

Moreover, the exemplary arrangement of Fig. 2 incorporated in the user terminal 20 of Fig. 1 and especially the micro processor 26 is adapted such that a plurality of messages can be generated and stored, whereby each of the respective messages can be assigned to the telephone or call number of a specific party which also is stored in the storage unit 28.

Additionally, for assigning a message to a call or telephone number any grouping mechanism might be used, such as for example for assigning a plurality of messages to one stored telephone number and/or for assigning one message to a plurality of stored telephone numbers. Moreover, each of the messages may be assigned to a specific day time, for example the message "I should be reachable in the office now" may be assigned to the working time of the individual customer. For the evening for example a message like "hey, I am likely to have a dinner now, try at home" may be created.

If an incoming call Sᵢ is received at the receiver unit 27a and practically the speaker unit 24 is providing the call signal, the microprocessor 26 is searching for a transmittable message stored in the storage unit 28 that is assigned to the number of the calling party if said calling party is stored or for a message that is assigned to the actual time of the day. If there is no message complying with at least one of these conditions, or if the number of the cal-led party is not stored a general message or a message depending on chance is selected of fetched from the storage 28 that has to be transmitted to the calling party via the transmitting unit 27b processing the respective information signal to be fed to the antenna for transmission.

The exemplar mobile station 20 is further comprising a timer unit or threshold unit 29 to determine, practically also by use of the key board 22 a delay time for transmitting the reply signal Sᵣ with regard to the time of the incoming call Sᵢ. This can be provided for example by use of a threshold representing a time duration, in particular a definable time duration, or by providing a threshold representing a certain amount of call signals. If the time or the amount of call signal provided by the threshold is reached, the microprocessor 26 is activating the transmitting unit 27b such that the selected message Sᵣ is transmitted back to the user terminal 10 of the calling party.

It should be obvious for a person skilled in the art that the receiving unit 27a and the transmitting unit 27b also can be incorporated within one so called transceiver unit.

Moreover, the invention is covering embodiments wherein the messages to be directed can be optical and/or acoustical replayed at the receiving side, i.e. based on the exemplar embodiment at the user terminal 10. It is further proposed that the user terminal 20 is adapted to use the so called wireless access protocol which also can be used for generating reply signals based on an information fetched from the internet. Furthermore, as an alternative or in addition to the key board 22 the user terminal 20 including the automatic information reply functionality may be speech operated, too.

## Claims

1. Method for transmitting an information signal between the user terminal (20) of a called party of a telecommunication system, in particular of a mobile radio telecommunication system, and the user terminal (10) of a calling party of a telecommunication system, in particular of a mobile radio telecommunication system, **characterised in that** an information reply signal (Sᵣ) is automatically transmitted from the user terminal (20) of the called party to the user terminal (10) of the calling party in response to an incoming call (Sᵢ) at the user terminal (20) of the called party that is originated by said calling party.

2. Method of claim 1,
wherein the information reply signal (Sᵣ) is generated for optical and/or acoustical replying.

3. Method of claim 1 or 2,
wherein the information reply signal (Sᵣ) is generated by means of a short message service.

4. Method of any of the preceding claims,
wherein the information reply signal (Sᵣ) is generated individually and is stored in the user terminal (20) of the called party.

5. Method of any of the preceding claims,
wherein a plurality of information reply signals (Sᵣ) are generated and stored with each of the information reply signals (Sᵣ) assigned to at least one definable number of stored potential calling parties.

6. Method of any of the preceding claims,
wherein a plurality of information reply signals (Sᵣ) are generated and stored, with each of the information reply signals (Sᵣ) assigned to a specific day time.

7. Method of any of the preceding claims,
wherein the information reply signal (Sᵣ) is transmitted after a definable amount of ringing signals based on the incoming call (Sᵢ) and/or after a definable duration of time based on the time of incoming.

8. User terminal of a telecommunication system, in particular a mobile station of a mobile radio telecommunication system, **characterised by** the user terminal having means (22, 26, 27b, 28, 29) for automatically transmitting an information reply signal (Sᵣ) to the user terminal (10) of a calling party of a telecommunication system in response to an incoming call (Sᵢ) at said user terminal that is originated by said calling party.

9. User terminal of claim 8,
comprising means (22, 26, 28) for generating the information reply signal (Sᵣ) by use of a short message service, by use of a wireless access protocol and/or means for generating the information reply signals by use of speech controlling.

10. User terminal of claim 8 or 9,
comprising means (22, 26, 28) for generating at least one individual information reply signal (Sᵣ).

11. User terminal of claim 10,
wherein the means (22, 26, 28) comprises a micro processor (28) and/or an implemented software.

12. User terminal of any of claims 8 to 11, comprising means (22, 26, 28) for assigning an information reply signal (Sᵣ) to an individual phone number of an user terminal of a party.

13. User terminal of any of claims 8 to 12, comprising means (22, 26, 28) for assigning an information reply signal to a specific day time.

14. User terminal of any of claims 8 to 13, comprising means (26, 29) for optionally activating the means for transmitting (27b, 28).

15. User terminal of any of claims 8 to 14, comprising means (22, 26, 29) for controlling a threshold representing the time between a first ringing signal of the incoming call (Sᵢ) and the activating of the means for transmitting (27b, 28).

16. Telecommunication system comprising a user terminal of any of claims 8 to 15.

17. A medium comprising a program, adapted to perform, when said program is run on a microprocessor (28), each of the steps of the method of any of claims 1 to 7.

## Patentansprüche

1. Verfahren zum Übertragen eines Informationssignals zwischen einem Benutzerendgerät (20) eines gerufenen Teilnehmers eines Telekommunikationssystems, insbesondere eines Mobilfunktelekommunikationssystems, und dem Benutzerendgerät (10) eines rufenden Teilnehmers eines Telekommunikationssystems, insbesondere eines Mobilfunktelekommunikationssystems, **dadurch gekennzeichnet, dass** ein Informationsantwortsignal (Sᵣ) automatisch von dem Benutzerendgerät (20) des gerufenen Teilnehmers an das Benutzerendgerät (10) des rufenden Teilnehmers unter Ansprechen auf einen ankommenden Ruf (Sᵢ) bei dem Benutzerendgerät (20) des gerufenen Teilnehmers, der von dem rufenden Teilnehmer ausgeht, übertragen wird.

2. Verfahren nach Anspruch 1, wobei das Informationsantwortsignal (Sᵣ) für eine optische und/oder akustische Antwort erzeugt wird.

3. Verfahren nach Anspruch 1 oder 2, wobei das Informationsantwortsignal (Sᵣ) mittels eines Kurznachrichtendienstes (SMS) erzeugt wird.

4. Verfahren nach einem der vorstehenden Ansprüche, wobei das Informationsantwortsignal (Sᵣ) individuell erzeugt wird, und in dem Benutzerendgerät (20) des gerufenen Teilnehmers gespeichert wird.

5. Verfahren nach einem der vorstehenden Ansprüche, wobei eine Vielzahl von Informationsantwortsignalen (Sᵣ) erzeugt und gespeichert wird, wobei jedes von den Informationsantwortsignalen (Sᵣ) wenigstens einer definierbaren Nummer gespeicherter potentieller rufender Teilnehmer zugeordnet wird.

6. Verfahren nach einem der vorstehenden Ansprüche, wobei eine Vielzahl von Informationsantwortsignalen (Sᵣ) erzeugt und gespeichert wird, wobei jedes von den Informationsantwortsignalen (Sᵣ) einer spezifischen Tageszeit zugeordnet wird.

7. Verfahren nach einem der vorstehenden Ansprüche, wobei das Informationsantwortsignal (Sᵣ) nach einer definierbaren Anzahl von Klingelsignalen auf der Basis des ankommenden Rufs (Sᵢ) und/oder nach einer definierbaren Zeitdauer auf der Basis der Ankunftszeit übertragen wird.

8. Benutzerendgerät eines Telekommunikationssystems, insbesondere eine Mobilstation eines Mobilfunktelekommunikationssystems, **dadurch gekennzeichnet, dass** das Benutzerendgerät Mittel (22, 26, 27b, 28, 29) enthält, um automatisch ein Informationsantwortsignal (Sᵣ) an das Benutzerendgerät (10) eines rufenden Teilnehmers eines Telekommunikationssystems unter Ansprechen auf einen ankommenden Ruf (Sᵢ) bei dem Benutzerendgerät, der von dem rufenden Teilnehmer ausgeht, zu übertragen.

9. Benutzerendgerät nach Anspruch 8, welches Mittel (22, 26, 28) zum Erzeugen des Informationsantwortsignals (Sᵣ) unter Verwendung eines Kurznachrichtendienstes (SMS), unter Verwendung eines drahtlosen Zugangsprotokolls und/oder Mittel zum Erzeugen der Informationsantwortsignale unter Verwendung einer Sprachsteuerung aufweist.

10. Benutzerendgerät nach Anspruch 8 oder 9, mit Mitteln (22, 26, 28) zum Erzeugen wenigstens eines individuellen Informationsantwortsignals (Sᵣ).

11. Benutzerendgerät nach Anspruch 10, wobei die Mittel (22, 26, 28) einen Mikroprozessor (28) und/oder eine implementierte Software umfassen.

12. Benutzerendgerät nach einem der Ansprüche 8 bis 11, mit Mitteln (22, 26, 28) zum Zuordnen eines Informationsantwortsignals (Sᵣ) zu einer individuellen Telefonnummer eines Benutzerendgerätes eines Teilnehmers.

13. Benutzerendgerät nach einem der Ansprüche 8 bis 12, mit Mitteln (22, 26, 28) zum Zuordnen eines Informationsantwortsignals zu einer spezifischen Tageszeit.

14. Benutzerendgerät nach einem der Ansprüche 8 bis 13, mit Mitteln (26, 29) zum optionalen Aktivieren der Mittel für die Übertragung (27b, 28).

15. Benutzerendgerät nach einem der Ansprüche 8 bis 14, mit Mitteln (22, 26, 29) zum Steuern eines Schwellenwertes, der die Zeit zwischen dem ersten Klingelsignal des ankommenden Rufs (Sᵢ) und der Aktivierung der Mittel zum Übertragen (27b, 28) repräsentiert.

16. Telekommunikationssystem mit einem Benutzerendgerät nach einem der Ansprüche 8 bis 15.

17. Medium mit einem Programm, das dafür angepasst ist, dass, wenn das Programm auf einem Mikroprozessor (28) abläuft, jeden von den Schritten des Verfahrens nach einem der Ansprüche 1 bis 7 auszuführen.

## Revendications

1. Procédé de transmission d'un signal d'information entre le terminal d'utilisateur (20) d'une personne appelée d'un système de télécommunications, en particulier d'un système de radiotélécommunications mobiles, et le terminal d'utilisateur (10) d'une personne appelante d'un système de télécommunications, en particulier d'un système de radiotélécommunications mobiles, **caractérisé en ce que** le signal d'information en réponse (Sᵣ) est automatiquement transmis entre le terminal d'utilisateur (20) de la personne appelée et le terminal d'utilisateur (10) de la personne appelante en réponse à un appel entrant (Sᵢ) arrivant au terminal d'utilisateur (20) de la personne appelée et provenant de ladite personne appelante.

2. Procédé selon la revendication 1, dans lequel le signal d'information en réponse (Sᵣ) est produit dans le but de fournir une réponse optique et/ou acoustique.

3. Procédé selon la revendication 1 ou 2, dans lequel le signal d'information en réponse (Sᵣ) est produit à l'aide d'un service de messages courts.

4. Procédé selon l'une quelconque des revendications précédentes, dans lequel le signal d'information en réponse (Sᵣ) est produit individuellement et est stocké dans le terminal d'utilisateur (20) de la personne appelée.

5. Procédé selon l'une quelconque des revendications précédentes, dans lequel une pluralité de signaux d'information en réponse (Sᵣ) sont produits et stockés avec chacun des signaux d'information en réponse (Sᵣ) qui sont attribués à au moins un nombre définissable de personnes appelantes potentielles stockées en mémoire.

6. Procédé selon l'une quelconque des revendications précédentes, dans lequel une pluralité de signaux d'information en réponse (Sᵣ) sont produits et stockés avec chacun des signaux d'information en réponse (Sᵣ) attribués à des heures spécifiques de la journée.

7. Procédé selon l'une quelconque des revendications précédentes, dans lequel le signal d'information en réponse (Sᵣ) est transmis après un durée définissable de signaux de sonnerie, à partir de l'appel entrant (Si), et/ou après une durée définissable de temps, à partir de l'heure d'arrivée.

8. Terminal d'utilisateur d'un système de télécommunications, en particulier une station mobile d'un système de radiotélécommunications mobiles, **caractérisé en ce que** le terminal d'utilisateur possède un moyen (22, 26, 27b, 28, 29) destiné à transmettre automatiquement un signal d'information en réponse (Sᵣ) au terminal d'utilisateur (10) d'une personne appelante d'un système de télécommunications, en réponse à un appel entrant (Sᵢ) arrivant audit terminal d'utilisateur et provenant de ladite personne appelante.

9. Terminal d'utilisateur selon la revendication 8, comprenant un moyen (22, 26, 28) destiné à produire le signal d'information en réponse (Sᵣ) en utilisant un service de messages courts, en utilisant un protocole d'accès sans fil et/ou un moyen destiné à produire des signaux d'information en réponse en utilisant une commande vocale.

10. Terminal d'utilisateur selon la revendication 8 ou 9, comprenant un moyen (22, 26, 28) destiné à produire au moins un signal d'information en réponse (Sᵣ) individuel.

11. Terminal d'utilisateur selon la revendication 10, dans lequel le moyen (22, 26, 28) comprend un microprocesseur (28) et/ou un logiciel de mise en oeuvre.

12. Terminal d'utilisateur selon l'une quelconque des revendications 8 à 11, comprenant un moyen (22, 26, 28) destiné à attribuer un signal d'information en réponse (Sᵣ) à un numéro de téléphone individuel d'un terminal d'utilisateur d'une personne.

13. Terminal d'utilisateur selon l'une quelconque des revendications 8 à 12, comprenant un moyen (22, 26, 28) destiné à attribuer un signal d'information en réponse à une heure spécifique de la journée.

14. Terminal d'utilisateur selon l'une quelconque des revendications 8 à 13, comprenant un moyen (26, 29) destiné à activer optionnellement le moyen de transmission (27b, 28) .

15. Terminal d'utilisateur selon l'une quelconque des revendications 8 à 14, comprenant un moyen (22, 26, 29) destiné à commander une valeur de seuil représentant le temps entre un premier signal de sonnerie de l'appel entrant (Sᵢ) et l'activation du moyen de transmission (27b, 28).

16. Système de télécommunications comprenant un terminal d'utilisateur selon l'une quelconque des revendications 8 à 15.

17. Support comportant un programme adapté, lorsque ledit programme est exécuté sur un microprocesseur (28), pour exécuter chacune des étapes du procédé selon l'une quelconque des revendications 1 à 7.
